# DEMANDE DE BREVET EUROPEEN

(11) **EP 3 418 564 A1**
(43) Date de publication de la demande: **26.12.2018**
(21) Numéro de dépôt: 18176572.8
(22) Date de dépôt: 07.06.2018
(51) Int. Cl.: F04B 23/02, B60S 1/56, F04B 31/00, F04B 35/00, F04B 39/00, F04B 39/08, F04B 39/10, F04B 41/02

(54) **SYSTÈME DE COMPRESSION D'UN GAZ DESTINÉ À SÉCHER AU MOINS UN CAPTEUR DE VÉHICULE AUTOMOBILE**

(30) Priorité: 21.06.2017 FR 1755656
(71) Demandeur: Valeo Systèmes d'Essuyage, 78322 Le Mesnil Saint Denis (FR)
(72) Inventeur: COMBEAU, Matthieu, 63500 ISSOIRE (FR); KOLANOWSKI, Grégory, 63500 ISSOIRE (FR)

(57) **Abrégé**

L'invention concerne un système de compression (10) d'un gaz (G) destiné à sécher au moins un capteur (5) de véhicule automobile comprenant :
- une pompe d'injection (2) d'un liquide (L) destinée à pomper le liquide depuis un réservoir de liquide (4) vers un compresseur (1),
- le compresseur (1), dans lequel le liquide (L) est destiné à comprimer le gaz (G), et
- au moins un élément de gestion d'un débit (3) du gaz (G) situé en aval du compresseur (1), l'aval s'entendant selon un sens (S2) de circulation d'un gaz (G) comprimé dans le système de compression (10), autorisant ou interdisant sélectivement une circulation du gaz (G) en direction de l'au moins un capteur (5).

## Description

La présente invention se rapporte au domaine des dispositifs d'aide à la conduite et, plus particulièrement, au domaine des capteurs utilisés à cette fin, tels que des moyens de prise de vue, en particulier des caméras, ou des moyens de détection par ondes électromagnétiques, en particulier des radars ou des lidars. Dans ce domaine, l'invention vise plus particulièrement les dispositifs de séchage intervenant après le nettoyage de tels moyens de prise de vue.

Des capteurs équipent un nombre de plus en plus grand de véhicules automobiles afin d'aider le conducteur du véhicule dans certaines situations de conduite, dont une, bien connue, est l'aide au stationnement. Pour que cette aide soit la plus efficace possible, les images fournies par les moyens prises de vue, ou les données transmises par les radars par exemple, doivent être de la meilleure qualité possible, et il est donc indispensable de disposer de faces de ces capteurs, tournées vers l'extérieur du véhicule, qui soient propres. Pour ce faire, un dispositif de nettoyage du capteur peut être associé à ce capteur, et commandé pour injecter, sur ledit capteur, un flux de fluide nettoyant durant une période où il n'y a pas de détection.

Par ailleurs, après le nettoyage des capteurs, il est intéressant de les sécher rapidement afin d'éviter tout risque de pollution de l'image par d'éventuelles traces qu'un tel liquide pourrait laisser (gouttes, coulures, etc ...). Pour cela, la projection d'un fluide gazeux, tel que de l'air, sur le capteur est prévu. Cette projection d'air peut être mise en oeuvre par un dispositif de séchage, qui serait en supplément du dispositif de nettoyage, ou elle peut également être mise en oeuvre par les dispositifs de nettoyage permettant l'injection de différents types de fluides, liquides ou gazeux, afin d'assurer le nettoyage puis le séchage.

Actuellement, le séchage des capteurs est réalisé à l'aide d'un système de compression comprenant un compresseur à membrane de type air/air. Ce type de compresseur utilise le principe de soufflage en continu qui ne permet pas d'atteindre des pressions suffisantes pour sécher le capteur sans laisser de traces. En effet, la pression de l'air en sortie d'un tel compresseur avoisine 0,2 bar et est insuffisante pour un séchage optimal. De plus, pour atteindre cette pression, un tel système de compression nécessite la présence d'un réservoir d'air dédié au compresseur à membrane. Compte tenu de la conception des nouveaux véhicules, avec moins d'espace disponible sous le capot, l'intégration d'un tel réservoir nécessite de repenser l'organisation sous capot et pose un problème d'encombrement.

Par ailleurs, en plus d'être encombrant et peu puissant, ce type de compresseur présente généralement une durée de vie limitée. En effet, après un certain nombre de cycles la membrane du compresseur a tendance à se dégrader. Ainsi, la durée de vie du compresseur est limitée à la durée de vie de la membrane.

La présente invention a pour but d'optimiser le séchage des capteurs, tant dans ses performances de séchage, que dans son encombrement.

Dans ce but, la présente invention a pour objet un système de compression d'un gaz destiné à sécher au moins un capteur de véhicule automobile comprenant :
- un compresseur, dans lequel un liquide est destiné à comprimer le gaz,
- une pompe d'injection du liquide destinée à pomper le liquide depuis un réservoir de liquide vers le compresseur, et
- au moins un élément de gestion d'un débit du gaz situé en aval du compresseur, l'aval s'entendant selon un sens de circulation d'un gaz comprimé dans le système de compression, autorisant ou interdisant sélectivement une circulation du gaz en direction de l'au moins un capteur.

Un tel système de compression avec un compresseur de type liquide/gaz permet d'atteindre des pressions en gaz élevées permettant de sécher le ou les capteurs efficacement et sans laisser de traces. De plus, le réservoir de liquide utilisable pour atteindre ces pressions peut être un réservoir déjà existant sur le véhicule. Ainsi, un tel système de compression est d'intégration simplifiée par rapport au système de compression de l'art antérieur et permet de s'affranchir du problème d'encombrement.

De plus, ce type de compresseur n'utilise pas de membrane ce qui permet de rallonger sa durée de vie.

Il est à noter que l'élément de gestion du débit permet d'assurer la compression du gaz en amont lorsqu'il interdit la circulation du gaz en direction de l'au moins un capteur.

Il est entendu qu'un capteur de véhicule est défini comme un élément de détection fournissant un signal électrique proportionnel à une grandeur physique à mesurer. Plus précisément, ce capteur est destiné à assurer des fonctions de détection autour du véhicule. Pour cela, un tel capteur est disposé sur la carrosserie du véhicule et est tourné vers l'extérieur de véhicule.

Selon une ou plusieurs caractéristiques de l'invention, pouvant être prises seules ou en combinaison, on pourra prévoir que :
- la pompe d'injection est réversible de manière à autoriser une aspiration du liquide présent dans le compresseur. Une telle pompe réversible permet au système de compression de revenir à sa position initiale afin de réaliser un nouveau cycle de séchage. L'utilisation d'une telle pompe réversible permet de gagner en efficacité. Cette pompe d'injection réversible permet une aspiration du liquide depuis le compresseur et vers le réservoir de liquide.
- Le liquide est non compressible. Ainsi, la compression d'un tel liquide permet d'agir sur le compresseur, par exemple en permettant de déplacer un piston à l'intérieur du compresseur agencé entre ce liquide et le gaz à comprimer. Un tel liquide est par exemple de l'huile ou du liquide lave-glace.
- Le gaz est de l'air.
- Le compresseur comprend un piston délimitant une première chambre pour le liquide et une deuxième chambre pour le gaz, le piston étant destiné à se déplacer en fonction d'un volume de liquide présent dans la première chambre.
- Le piston est libre. On entend par là que le piston ne comprend pas de moyen de guidage destiné à l'accompagner durant son déplacement dans le compresseur.
- Le compresseur comprend un moyen de guidage du piston destiné à accompagner le déplacement du piston le long de sa course.
- Le moyen de guidage est une tige rentrante solidaire du piston.
- Le moyen de guidage est un couple languette/rainure. Plus précisément, un des éléments du couple languette/rainure est embarqué sur le piston et l'autre sur le compresseur, notamment sur une face interne du compresseur le long de laquelle coulisse le piston.
- Le piston est destiné à coulisser dans le compresseur de manière étanche pour interdire un passage de liquide et/ou de gaz entre la première chambre et la deuxième chambre.
- Le compresseur présente un volume maximal de 150 cm3.
- L'élément de gestion du débit du gaz est une électrovanne. L'utilisation d'une électrovanne, plutôt qu'une soupape de décharge par exemple, présente l'avantage de pouvoir être pilotée électroniquement afin de programmer son ouverture et sa fermeture.
- L'au moins un élément de gestion du débit du gaz est configuré pour autoriser la circulation du gaz en direction de l'au moins un capteur lorsqu'une pression du gaz est égale à au moins 2 bars. Plus précisément, la pression du gaz est mesurée dans un espace situé entre le compresseur et l'élément de gestion du débit de gaz ou dans un espace comprenant la deuxième chambre du compresseur et une conduite reliant le compresseur à l'élément de gestion du débit du gaz. Dans ces deux cas, la mesure de la pression est représentative de la pression du gaz comprimé. Une telle pression, d'au moins 2 bars, permet de s'assurer que le séchage du capteur est optimal, en ne laissant aucune trace et salissure.
- Le système de compression comprend un capteur de pression situé entre le compresseur et l'au moins un élément de gestion d'un débit du gaz.
- Le système de compression comprend au moins une mise à l'air libre de manière à introduire un gaz non comprimé dans le compresseur. Plus précisément, la présence de cette mise à l'air libre permet d'introduire facilement un air extérieur vers la deuxième chambre du compresseur.
- La mise à l'air libre est équipée d'un filtre à air.
- La mise à l'air libre est équipée d'un organe de gestion d'un débit du gaz agencé de manière à interdire un passage du gaz comprimé vers la mise à l'air libre et à autoriser un passage du gaz non comprimé depuis la mise à l'air libre vers le compresseur.
- L'organe de gestion d'un débit du gaz équipant la mise à l'air libre est un clapet anti retour.
- La mise à l'air libre est située entre le compresseur et l'au moins un élément de gestion du débit.
- Le système de compression comprend un dispositif de chauffage du gaz destiné à assurer une fonction de dégivrage de l'au moins un capteur.
- Le dispositif de chauffage du gaz est situé entre le compresseur et l'élément de gestion du débit de gaz ou dans un espace comprenant la deuxième chambre du compresseur et une conduite reliant le compresseur à l'élément de gestion du débit du gaz. En d'autres termes, le dispositif de chauffage du gaz est situé au niveau du gaz comprimé.
- Le dispositif de chauffage du gaz est une résistance.

L'invention a également pour objet un ensemble de compression d'un gaz destiné à sécher au moins un capteur de véhicule automobile comprenant : un réservoir de liquide et un système de compression caractérisé en ce que le système de compression est tel que défini précédemment.

Selon une ou plusieurs réalisations, il pourra être prévu que :
- L'ensemble de compression comprend un réservoir de liquide situé en amont de la pompe d'injection du système de compression, l'aval étant entendu selon un sens de d'injection du liquide. Ce réservoir constitue un réservoir dédié au système de compression selon l'invention.
- Le réservoir de liquide de l'ensemble de compression est un réservoir de liquide lave-glace du véhicule automobile. Ce réservoir de liquide lave-glace est destiné à alimenter un dispositif de projection de fluide en direction des capteurs et/ou des surfaces vitrées du véhicule, le liquide lave-glace étant par ailleurs le liquide destiné à comprimer le gaz dans le compresseur. L'utilisation d'un tel réservoir de liquide lave-glace dans le cadre de l'invention permet de s'affranchir des problèmes d'encombrement rencontrés avec les systèmes de compression de l'art antérieur.

L'invention a également pour objet un ensemble de projection d'un fluide en direction d'un capteur de véhicule automobile comprenant un dispositif de projection du fluide destiné à être dirigé vers le capteur, et un système de compression, le dispositif de projection étant raccordé au système de compression, caractérisé en ce que le système de compression est tel que défini précédemment.

Selon une ou plusieurs réalisations, il pourra être prévu que :
- Le dispositif de projection est situé en aval de l'au moins un élément de gestion du débit de gaz du système de compression, l'aval étant entendu selon le sens de circulation du gaz comprimé dans le système de compression, de manière à assurer un séchage du capteur.
- Le fluide destiné à être projeté par le dispositif de projection est un gaz pour sécher le capteur. Le gaz est par exemple de l'air.
- Le dispositif de projection est également configuré pour projeter du liquide pour nettoyer le capteur. Le liquide est avantageusement du liquide lave-glace.

D'autres caractéristiques et avantages de la présente invention apparaitront plus clairement à l'aide de la description et des dessins parmi lesquels :
- la figure 1 est une représentation schématique d'un circuit de séchage d'au moins un capteur de véhicule automobile comprenant un système de compression selon la présente invention ; et
- la figure 2 est une vue de face d'un véhicule automobile comprenant le système de compression selon la présente invention.

Il faut tout d'abord noter que les figures exposent l'invention de manière détaillée pour mettre en oeuvre l'invention, lesdites figures pouvant bien entendu servir à mieux définir l'invention le cas échéant. Toutefois, il est à noter que ces figures n'exposent qu'une partie des exemples de réalisation possibles selon l'invention.

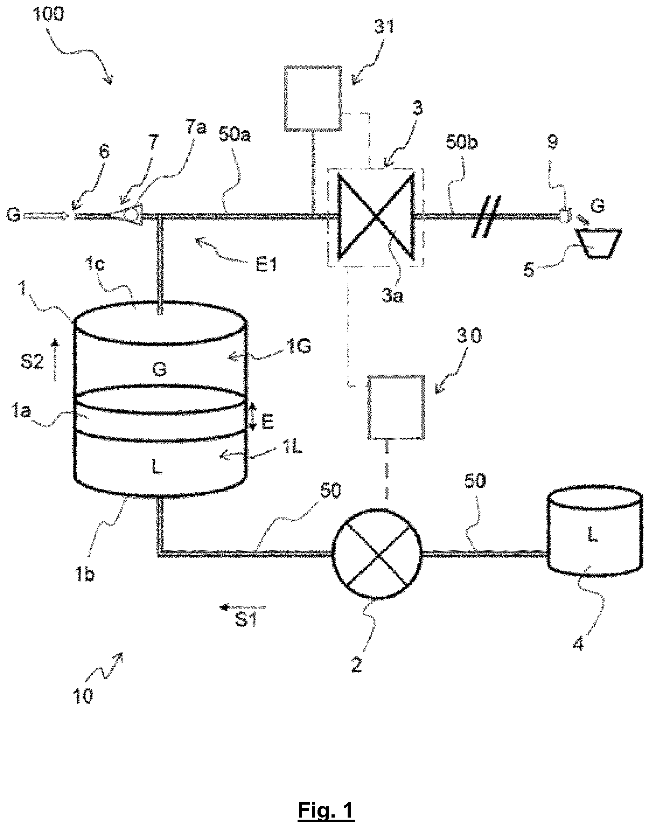

La figure 1 montre un circuit 100 de séchage d'au moins un capteur 5 de véhicule automobile comprenant un système de compression 10 d'un gaz G destiné à sécher le ou les capteurs 5. Le système de compression 10 comprend un compresseur 1, une pompe d'injection 2 et au moins un élément de gestion du débit 3 du gaz G. Bien entendu, des conduites 50, 50a, 50b sont prévues pour relier ces différents éléments les uns aux autres.

Le compresseur 1 est de type liquide/gaz dans lequel le liquide L est destiné à comprimer le gaz G. Selon l'exemple de réalisation illustré, le compresseur 1 se présente sous la forme d'un cylindre. Bien entendu, toute autre forme du compresseur 1 permettant la compression du gaz G par le liquide L pourrait être prévue. De plus, il est à noter que ce compresseur 1 présente un volume de 150 centimètres cubes, aux tolérances de fabrication près, permettant d'assurer un séchage optimal du capteur 5, sans laisser de traces ou de salissures.

Le compresseur 1 comprend un piston 1a permettant de définir une première chambre 1L pour le liquide L et une deuxième chambre 1G pour le gaz G. Le piston 1a se déplace d'une extrémité 1b à l'autre 1c du compresseur 1, en fonction du volume de liquide L admis dans le compresseur 1. Selon le sens de déplacement du piston 1a, celui-ci comprime le gaz G ou aspire du gaz G, comme cela sera décrit plus loin. De préférence, le piston 1a coulisse dans le compresseur de manière étanche afin d'interdire un passage de fluide entre les deux chambres 1G, 1L. Il est à noter que les extrémités 1b, 1c du compresseur sont toutes deux opposées l'une à l'autre le long de l'axe de déplacement du piston 1a. On distingue alors une première extrémité 1b du compresseur 1 située au plus près d'un orifice pour le liquide L et une deuxième extrémité 1c au plus près d'un orifice pour le gaz G.

Le piston 1a peut se présenter sous différentes formes. Selon l'exemple de réalisation illustré, le piston 1a est libre, dans le sens où il n'est pas relié à un moyen de guidage. Dans ce cas, il est prévu que l'épaisseur E du piston 1a soit suffisamment grande pour éviter que le piston 1a se désaxe, se déforme ou se retourne sous l'effet de la pression et du déplacement.

Selon une variante de réalisation, le piston 1a coopère avec un moyen de guidage pour éviter que celui-ci se désaxe, se déforme ou se retourne sous l'effet de la pression. Un tel moyen de guidage prend la forme d'un couple rainure/languette assurant une liaison glissière entre le piston 1a et le compresseur 1. Par exemple, la première chambre 1L comprend au moins deux rainures, s'étendant parallèlement à la direction de déplacement du piston 1a et, coopérant avec deux languettes prévues sur une périphérie du piston 1a. Il peut également être prévu que le moyen de guidage prenne la forme d'une tige rentrante dans le compresseur 1a. Par exemple cette tige rentrante est solidaire du piston 1a et prend appui sur l'une 1b ou l'autre 1c des extrémités du compresseur 1. La tige rentrante est par exemple télescopique.

Par ailleurs, la pompe d'injection 2 permet d'acheminer du liquide L en direction du compresseur 1. Pour cela, la pompe d'injection 2 est reliée d'une part à un réservoir de liquide 4 et d'autre part au compresseur 1. Avantageusement, la pompe d'injection 2 est réversible de manière à autoriser une aspiration du liquide L depuis le compresseur 1 vers le réservoir de liquide 4, comme cela sera décrit plus loin.

Le circuit 100 comprend un réservoir de liquide 4 qui peut être dédié au système de compression 10 ou bien être déjà existant sur le véhicule automobile. Dans les deux cas, le réservoir de liquide 4 est situé en amont de la pompe d'injection 2, l'amont étant entendu selon un sens S1 d'injection du liquide L. Bien entendu, il est avantageux, d'un point de vue encombrement, d'utiliser un réservoir de liquide 4 déjà existant sur le véhicule automobile. Dans ce cas, le réservoir de liquide 4 est par exemple le réservoir de liquide lave-glace destiné à alimenter un dispositif assurant la propreté des capteurs et/ou des surfaces vitrées du véhicule automobile, le liquide lave-glace étant alors le liquide L destiné à comprimer le gaz G dans le compresseur 1.

Plus précisément, le liquide L destiné à comprimer le gaz G dans le compresseur 1 est non compressible de manière à pouvoir déplacer le piston 1a et comprimer le gaz G situé dans la deuxième chambre 1G du compresseur 1. Par exemple, ce liquide L est du liquide lave-glace, de l'huile, de l'eau, ou du liquide de refroidissement. Il est à noter que le gaz G est, avantageusement, de l'air. Bien entendu, selon les besoins en séchage, un autre gaz que de l'air pourrait être prévu. Dans ce cas, le système de compression 10 fonctionnerait avec ce même gaz, sous différents états de compression.

Par ailleurs, afin de participer à la compression du gaz G, un élément de gestion du débit 3 du gaz G est disposé en aval du compresseur 1, l'aval étant entendu selon un sens S2 de circulation du gaz G comprimé dans le système de compression 10. Selon une variante de réalisation, l'élément de gestion du débit 3 du gaz G est disposé directement en sortie de la deuxième chambre 1G du compresseur 1. Cet élément de gestion du débit 3 autorise ou interdit sélectivement une circulation du gaz G en direction du capteur 5. Cet élément de gestion du débit 3 est configuré pour autoriser la circulation du gaz G en direction du capteur 5 lorsque la pression du gaz G comprimé atteinte est égale à au moins 2 bars. Il est à noter que l'éjection du gaz G à une pression de 2 bars sur le capteur 5 permet de le sécher de manière efficace sans risque de traces ou de résidus de liquide.

L'élément de gestion du débit 3 est par exemple une électrovanne 3a, configurée pour être pilotée électroniquement afin de programmer son ouverture et sa fermeture.

Afin d'activer l'électrovanne 3a de manière à ce qu'elle autorise la circulation du gaz G en direction du capteur 5, le système de compression 10 comprend un calculateur 30 permettant d'apprécier la pression atteinte en fonction de la durée de fonctionnement de la pompe d'injection 2. Par exemple, ce calculateur se base sur des valeurs théoriques permettant d'affirmer qu'au bout de 2 à 4 secondes de fonctionnement de la pompe d'injection 2, la pression du gaz G comprimé situé en amont de l'électrovanne 3a est supérieure ou égale à 2 bars.

Selon une variante de réalisation, le système de compression 10 comprend un capteur de pression 31 qui est ici disposé entre le compresseur 1 et l'élément de gestion du débit 3 du gaz G. Ce capteur de pression permet d'activer l'élément de gestion du débit 3 lorsque la pression du gaz G comprimé est supérieure ou égale à 2 bars. Plus précisément, la pression du gaz est mesurée entre le compresseur 1 et l'élément de gestion du débit de gaz 3 ou dans un espace E1 comprenant la deuxième chambre 1G du compresseur 1 et une conduite 50a reliant le compresseur 1 à l'élément de gestion du débit 3 du gaz G. Dans ces deux cas, la mesure de la pression est représentative de la pression du gaz G comprimé.

On comprend des paragraphes précédents que le calculateur 30 et le capteur de pression 31, s'ils sont représentés sur la même figure, peuvent être mis en oeuvre indépendamment l'un de l'autre dans le système de compression 10, dès lors qu'ils permettent un pilotage optimisé de l'électrovanne 3a formant ici l'élément de gestion du débit 3.

On va maintenant décrire un exemple de mise en oeuvre d'un tel circuit 100 dans le cadre du séchage du capteur 5.

Suite à une activation du système de compression 10, à la demande d'un usager ou à la suite d'un cycle de nettoyage du capteur 5, la pompe d'injection 2 achemine du liquide L lave-glace depuis le réservoir 4 de liquide lave-glace vers le compresseur 1. L'entrée du liquide L lave-glace dans la première chambre 1L du compresseur 1 permet de déplacer le piston 1a vers la deuxième extrémité 1c, dans la direction de la deuxième chambre 1G contenant le gaz G, comme par exemple de l'air.

L'élément de gestion du débit 3, prenant ici la forme d'une électrovanne 3a, est inactivé, dans le sens où il interdit la circulation de l'air en direction du capteur 5. Le liquide L lave-glace continuant à remplir la première chambre 1L du compresseur 1 permet alors de comprimer l'air bloqué dans l'espace E1 comprenant la deuxième chambre 1G et la conduite 50a reliant le compresseur 1 à l'électrovanne 3a. L'espace E1 se réduisant, cela permet de faire monter en pression l'air emprisonné dans cet espace E1.

Il est à noter que suivant les performances de la pompe d'injection 2, telles que son débit, la durée de fonctionnement de la pompe d'injection 2 varie pour que l'air soit à une pression de 2 bars. Selon un exemple de réalisation, après trois secondes de fonctionnement de la pompe d'injection 2, l'air est à une pression de 2 bars, ce qui permet une activation de l'électrovanne 3a, dans le sens où celle-ci s'ouvre de manière à laisser passer l'air en direction du capteur 5.

Il est notable que l'électrovanne 3a est reliée au capteur 5 par un conduit 50b alimentant un dispositif de projection 9 de fluide dirigé vers le capteur 5 afin de projeter du fluide pour nettoyer et sécher le capteur 5. Bien entendu, plusieurs capteurs 5 pourraient être mis en relation avec l'électrovanne 3a. Pour cela, l'électrovanne 3a serait reliée à un réseau de conduits 50b chacun destinés à éjecter de l'air en direction de différents capteurs 5. Dans ce cas d'application, afin que la pression en air soit suffisante pour assurer un séchage efficace de chacun de ces capteurs 5, le compresseur 1 serait surdimensionné et la durée de remplissage en liquide L serait allongée.

Selon une variante de réalisation, le compresseur 1 est relié à plusieurs électrovannes 3a, chacune destinée à autoriser ou non le passage du gaz G en direction d'un des conduits 50b permettant le séchage d'un ou de plusieurs capteurs 5. Cette variante de réalisation présente l'avantage de pouvoir choisir le capteur 5 que l'on souhaite sécher en fonction de l'électrovanne que l'on décide d'activer.

Une autre variante de réalisation consiste à disposer plusieurs compresseurs 1 sous-dimensionnés en aval de la même pompe d'injection 2, l'aval étant entendu selon le sens S1 d'injection du liquide L. Chacun des compresseurs 1 coopèrent alors avec une électrovanne 3a dédiée qui alimente en air un conduit 50b dirigé vers l'un des différents capteurs 5.

Dans tous les cas, une fois que le séchage du capteur 5 a été effectué, le piston 1a doit revenir à sa position initiale pour commencer un nouveau cycle. Pour cela, il est prévu que la pompe d'injection 2 fonctionne en sens inverse de manière à aspirer du liquide L depuis le compresseur 1 vers le réservoir de liquide 4. Un tel fonctionnement de la pompe 2 en sens inverse a pour but d'introduire de l'air dans la deuxième chambre 1G du compresseur 1. Pour cela, et selon l'exemple de réalisation illustré, le système de compression 10 comprend une mise à l'air libre 6 permettant d'introduire facilement de l'air extérieur vers la deuxième chambre 1G du compresseur 1. Cette mise à l'air libre 6 est située entre le compresseur 1 et l'électrovanne 3a. Pour éviter la pollution du système de compression 10, il peut être prévu que la mise à l'air libre 6 soit équipée d'un filtre à air.

Ainsi, lors de l'aspiration par la pompe d'injection 2, le liquide L lave-glace est renvoyé vers le réservoir 4 de liquide lave-glace. La sortie du liquide L lave-glace depuis la première chambre 1L du compresseur 1 permet de déplacer le piston 1a depuis la deuxième chambre 1G vers sa position initiale, c'est-à-dire en direction de la première chambre 1L. Le déplacement du piston 1a vers sa position initiale crée une dépression permettant d'aspirer de l'air extérieur via la mise à l'air libre 6. Selon une variante de réalisation, le système de compression 10 ne comprend pas de mise à l'air libre 6 et l'air extérieur est aspiré depuis le capteur 5, via le conduit 50b, avec l'électrovanne 3a en position ouverte.

Il est à noter que pour éviter une fuite de l'air comprimé lors de la compression via la mise à l'air libre 6, celle-ci est équipée d'un organe de gestion d'un débit 7 du gaz G. Par exemple, cet organe de gestion du débit 7 est un clapet anti-retour 7a. Le clapet anti-retour 7a est alors agencé de manière à interdire le passage du gaz G comprimé vers la mise à l'air libre 6, et pour autoriser le passage d'un gaz non comprimé, tel que de l'air extérieur, depuis la mise à l'air libre 6 vers le compresseur 1. En d'autres termes, le clapet anti-retour 7a permet d'autoriser un passage selon un premier sens et d'interdire ce passage selon un deuxième sens, opposé au premier sens.

Une fois la position initiale du piston 1a atteinte, la pompe d'injection 2 est désactivée. Pour cela, le système de compression 10 comprend un calculateur permettant d'apprécier la position du piston 1a atteinte en fonction de la durée de fonctionnement de la pompe d'injection 2. Par exemple, ce calculateur se base sur des valeurs théoriques permettant d'affirmer qu'au bout de 2 à 4 secondes de fonctionnement de la pompe d'injection 2, le piston 1a a atteint sa position initiale. Selon une variante de réalisation, le système de compression 10 comprend un capteur de position disposé dans le compresseur 1. Ce capteur de position permet de désactiver la pompe d'injection 2 lorsque le piston 1a a atteint sa position initiale.

Selon une variante de réalisation, la pompe d'injection 2 n'est pas réversible et le piston 1a reprend sa position initiale à l'aide d'un conduit d'évacuation du liquide L disposé entre la pompe d'injection 2 et le compresseur 1, le conduit d'évacuation du liquide L étant ouvert après le séchage du capteur 5. Selon une autre variante de réalisation, le piston 1a est équipé d'un ressort de rappel permettant son retour en position du côté de la première extrémité 1b du compresseur 1. Dans ce cas, un conduit d'évacuation du liquide L peut être prévu entre la pompe d'injection 2 et le compresseur 1.

Le système de compression dans cet état est alors prêt pour entamer un nouveau cycle de séchage.

Il est intéressant de noter que ce système de compression 10 est également adapté pour une fonction de dégivrage du capteur 5. En effet, selon les lois de la thermodynamique faisant le lien entre pression et coefficient d'échauffement, il s'avère que lors de la compression de l'air à température ambiante le coefficient d'échauffement est supérieur à 1. Cela signifie que l'air comprimé s'échauffe. Toutefois, lors de la détente de l'air, celui-ci se refroidit, mais le différentiel de température entre air comprimé et air détendu reste positif, ce qui signifie que même après libération de l'air en direction du capteur 5 par l'électrovanne 3a, cet air est plus chaud que l'air extérieur. En d'autres termes, la compression du gaz G amené à être projeté sur le capteur 5 participe à l'échauffement de celui-ci, et selon l'invention, le compresseur 1 de type liquide/gaz permet de comprimer le gaz G au-delà de 2 bars et donc d'élever la température du gaz G de façon substantielle. Même si le gaz G est amené à se détendre au fur et à mesure de sa circulation en aval de l'élément de gestion du débit 3, le gaz G soufflé sur le capteur 5 est suffisamment chaud pour réaliser un effet de dégivrage.

Pour accentuer l'échauffement du gaz G, un dispositif de chauffage, tel qu'une résistance, peut être installé entre la deuxième chambre 1G du compresseur 1 et le capteur 5, voire au niveau de l'espace E1 du système de compression 10. On comprend alors que ce dispositif de chauffage additionnel est moins énergivore qu'une résistance placée à un emplacement où l'air ne serait pas comprimé.

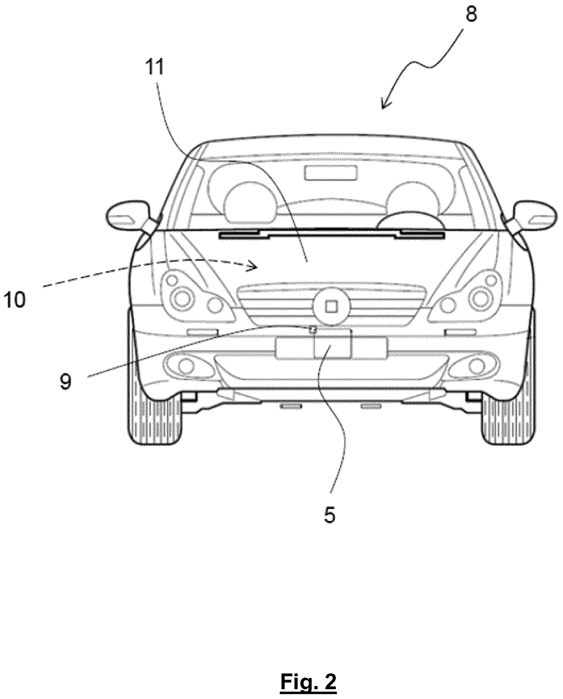

La figure 2 montre un véhicule automobile 8 comprenant un dispositif de projection 9 de fluide orienté vers un capteur 5. Ce dispositif de projection 9 coopère avec le système de compression 10 situé sous le capot 11 pour assurer au moins le séchage du capteur 5 en envoyant un fluide de type gazeux sur le capteur 5. Selon une réalisation avantageuse de l'invention, le dispositif de projection 9 est aussi configuré pour assurer le nettoyage du capteur 5, en plus du séchage, en projetant un fluide de type liquide sur le capteur 5. En d'autres termes, le dispositif de projection 9 est adapté pour éjecter aussi bien du liquide L, que du gaz G sur le capteur 5. Pour cela, le dispositif de projection 9 est raccordé au système de compression 10 d'un côté et à un système de pompage de liquide de l'autre côté.

La description qui précède explique clairement comment l'invention permet d'atteindre les objectifs qu'elle s'est fixés et notamment de proposer un système de compression 10 plus efficace, moins encombrant et ayant une meilleure durée de vie que celui de l'art antérieur. De plus, un tel système de compression 10 est également adapté au marché de la deuxième monte. Pour cela, le système de compression 10 est raccordé d'une part au réservoir de liquide lave-glace existant sur le véhicule et d'autre part à un embout de raccordement du dispositif de projection 9.

L'invention telle qu'elle vient d'être décrite ne saurait se limiter aux moyens et configurations exclusivement décrits et illustrés, et s'applique également à tous moyens ou configurations, équivalents et à toute combinaison de tels moyens ou configurations. De même, si l'invention a été ici décrite selon des variantes de réalisation mettant en oeuvre chacune séparément un type d'agencement des éléments constituant le système de compression 10, il va de soi que ces différents agencements présentés peuvent être combinés entre eux sans que cela nuise à l'invention.

## Revendications

1. Système de compression (10) d'un gaz (G) destiné à sécher au moins un capteur (5) de véhicule automobile (8) comprenant :
- un compresseur (1), dans lequel un liquide (L) est destiné à comprimer le gaz (G),
- une pompe d'injection (2) d'un liquide (L) destinée à pomper le liquide depuis un réservoir de liquide (4) vers le compresseur (1), et
- au moins un élément de gestion d'un débit (3) du gaz (G) situé en aval du compresseur (1), l'aval s'entendant selon un sens (S2) de circulation d'un gaz (G) comprimé dans le système de compression (10), autorisant ou interdisant sélectivement une circulation du gaz (G) en direction de l'au moins un capteur (5).

2. Système de compression selon la revendication 1, **caractérisé en ce que** la pompe d'injection (2) est réversible de manière à autoriser une aspiration du liquide (L) depuis le compresseur (1).

3. Système de compression selon la revendication 1 ou 2, **caractérisé en ce que** le compresseur (1) comprend un piston (1a) délimitant une première chambre (1L) pour le liquide (L) et une deuxième chambre (1G) pour le gaz (G), le piston (1a) étant destiné à se déplacer en fonction d'un volume de liquide (L) présent dans la première chambre (1L).

4. Système de compression selon l'une quelconque des revendications précédentes, **caractérisé en ce que** l'élément de gestion du débit (3) du gaz (G) est une électrovanne (3a).

5. Système de compression selon l'une quelconque des revendications précédentes, **caractérisé en ce que** l'au moins un élément de gestion du débit (3) du gaz (G) est configuré pour autoriser la circulation du gaz (G) en direction de l'au moins un capteur (5) lorsqu'une pression du gaz (G) est égale à au moins 2 bars.

6. Système de compression selon l'une quelconque des revendications précédentes, **caractérisé en ce qu'**il comprend au moins une mise à l'air libre (6) de manière à introduire un gaz (G) non comprimé dans le compresseur (1).

7. Système de compression selon la revendication précédente, **caractérisé en ce que** la mise à l'air libre (6) est équipée d'un organe de gestion d'un débit (7) du gaz agencé de manière à interdire un passage du gaz (G) comprimé vers la mise à l'air libre (6) et à autoriser un passage du gaz (G) non comprimé depuis la mise à l'air libre (6) vers le compresseur (1).

8. Système de compression selon la revendication 6 ou 7, **caractérisé en ce que** la mise à l'air libre (6) est située entre le compresseur (1) et l'au moins un élément de gestion du débit (3) de gaz (G).

9. Ensemble de compression d'un gaz (G) destiné à sécher au moins un capteur (5) de véhicule automobile (8) comprenant : un réservoir de liquide (4) et un système de compression (10) **caractérisé en ce que** le système de compression (10) est tel que défini selon l'une quelconque des revendications précédentes.

10. Ensemble de projection d'un fluide en direction d'un capteur (5) de véhicule automobile (8) comprenant un dispositif de projection (9) du fluide destiné à être dirigé vers le capteur (5), un système de compression (10), le dispositif de projection (9) étant raccordé au système de compression (10), **caractérisé en ce que** le système de compression (10) est tel que défini selon l'une quelconque des revendications 1 à 8.
